# EUROPÄISCHE PATENTANMELDUNG

(11) **EP 0 620 511 A1**
(43) Veröffentlichungstag der Anmeldung: **19.10.1994**
(21) Anmeldenummer: 94103758.2
(22) Anmeldetag: 11.03.1994
(51) Int. Cl.: G05B 19/12, B23B 45/02

(54) **Elektrogerät, insbesondere Heimwerker-Elektrogerät**

(30) Priorität: 14.04.1993 DE 4312161
(71) Anmelder: ROBERT BOSCH GMBH, 70442 Stuttgart (DE)
(72) Erfinder: Hoelderlin, Andreas, Dr. Ing., D-74354 Besigheim (DE)

(57) **Zusammenfassung**

Die Erfindung betrifft ein Elektrogerät, insbesondere Heimwerker-Elektrogerät mit einer elektronischen Steuereinheit, mit der der Gebrauch und die Bedienung des Heimwerker-Elektrogerätes durch Einbau eines elektronischen Notizbuches erleichtert werden soll.

Dazu ist vorgesehen, daß die elektronische Steuereinheit eine mit einer Speichereinheit (14) verbundene Eingabeeinheit (10) und eine ebenfalls mit der Speichereinheit (14) verbundene Ausgabeeinheit (18) aufweist und daß in der Speichereinheit (14) individuelle Informationen und/oder Programme für spezielle Einsatzsituationen nach einem vorgegebenen Algorithmus speicherbar sind.

## Beschreibung

### Stand der Technik

Die Erfindung betrifft ein Elektrogerät, insbesondere Heimwerker-Elektrogerät mit einer elektronischen Steuereinheit.

Es sind eine Vielzahl von Heimwerker-Elektrogeräten, die sowohl als Einzelgeräte für einen bestimmten Arbeitsvorgang, beispielsweise Bohren, Fräsen, Schleifen usw. geeignet sind, als auch Kombinationsgeräte bekannt, die eine Anzahl verschiedener Arbeitsvorgänge ermöglichen. Durch einen immer effizienteren Einsatz von Bauelementen der Leistungs- und Steuerelektronik wird der Einsatzbereich der Heimwerker-Elektrogeräte ständig vergrößert. Darüber hinaus erlaubt die Steuerelektronik eine Anpassung einzelner Heimwerker-Elektrogeräte an spezielle Einsatzsituationen, die des weiteren vom Benutzer noch individuell eingestellt werden können.

Mit immer weiter zunehmender Elektronisierung der Heimwerker-Elektrogeräte unterscheiden sich diese kaum noch von für den professionellen Einsatz geeigneten Elektrogeräten. Hierbei ist jedoch nachteilig, daß mit der Fülle von Einsatzmöglichkeiten bzw. verschiedener Einstell- und/oder Anpassungsregelungen die Handhabung der Heimwerker- Elektrogeräte eine genaue Kenntnis der Bedienelemente und deren Handhabung erfordert. Hierzu ist in aller Regel üblich, den Heimwerker-Elektrogeräten ein Handbuch beizulegen, das über die verschiedenen Möglichkeiten umfassend informiert. Es ist jedoch nachteilig, daß dieses Handbuch aufgrund seines nicht unerheblichen Umfanges nicht ständig mit dem Heimwerker-Elektrogerät mitgeführt werden kann, insbesondere dann nicht, wenn das Heimwerker-Elektrogerät unter verschiedenen Einsatzbedingungen an verschiedenen Orten zur Anwendung kommen soll. Mit der relativ umständlichen Handhabung, das heißt erst Nachschlagen und sich dann an dem Heimwerker-Elektrogerät mit der Handhabung vertraut machen, ist erstens ein Zeitverlust verbunden und zweitens ist die Gefahr der Verschmutzung bzw. Beschädigung des Handbuches bei Benutzung direkt auf einer Verwendungsbaustelle sehr hoch.

### Vorteile der Erfindung

Der Erfindung liegt die Aufgabe zugrunde, ein Elektrogerät der gattungsgemäßen Art zu schaffen, mit dem in einfacher Weise auch für Nichtfachleute eine spürbar erleichterte Anwendung möglich ist.

Diese Aufgabe wird erfindungsgemäß durch die im Kennzeichen des Hauptanspruches angegebenen Merkmale gelöst.

Es wurde gefunden, daß wenn das Elektrogerät mit einer Speichereinheit verbundene Eingabe- und Ausgabeeinheiten aufweist, diese vorteilhafterweise so eingesetzt werden können, daß die einzelnen Bedienfunktionen des betroffenen Elektrogerätes von einem Benutzer abgefragt werden können und diese auf der Ausgabeeinheit des Elektrogerätes angezeigt werden. Hiermit ist in einfacher Weise möglich, daß ein Benutzer sich kurz vor Einsatz des Elektrogerätes, beispielsweise beim Bohren in eine Betonwand, sich die für diesen Arbeitsvorgang speziellen Einstellmöglichkeiten des Elektrogerätes über die Eingabeeinheit auf der Ausgabeeinheit abrufen kann.

In weiterer Ausgestaltung der Erfindung weist die Speichereinheit ein externes Speichermittel, vorzugsweise eine einsteckbare Speicherkarte, auf, auf der die notwendigen Informationen über die Bedienung des Elektrogerätes und die damit auszuführenden Arbeiten abgespeichert sind. Durch Herausnehmen der einsteckbaren Speicherkarte kann der Benutzer diese sehr vorteilhaft, beispielsweise in einen Personalcomputer, eingeben und sich so ein personengebundenes Handbuch anzeigen und/oder ausdrucken lassen.

In weiterer Ausgestaltung der Erfindung ist vorgesehen, daß die Möglichkeit besteht, über die Eingabeeinheit persönliche, mit der Verwendung des Elektrogerätes zusammenhängende Daten in der Speichereinheit abzulegen. Hierdurch ist in sehr vorteilhafter Weise möglich, daß wenn ein Elektrogerät beispielsweise durch mehrere Benutzer bedient werden soll, sich jeder Benutzer die für ihn wichtigen Daten abspeichern kann und diese bei Bedarf jederzeit abrufbar sind.

Weitere vorteilhafte Ausgestaltungen der Erfindung ergeben sich aus den in den Unteransprüchen angegebenen Merkmalen.

### Zeichnung

Die Erfindung wird nachfolgend in Ausführungsbeispielen anhand der zugehörigen Zeichnungen näher erläutert. Es zeigen:
- Figur 1: ein Blockschaltbild der Erfindung und
- Figur 2: einen Flußplan über eine vorzugsweise Anwendung der Erfindung.

### Beschreibung der Ausführungsbeispiele

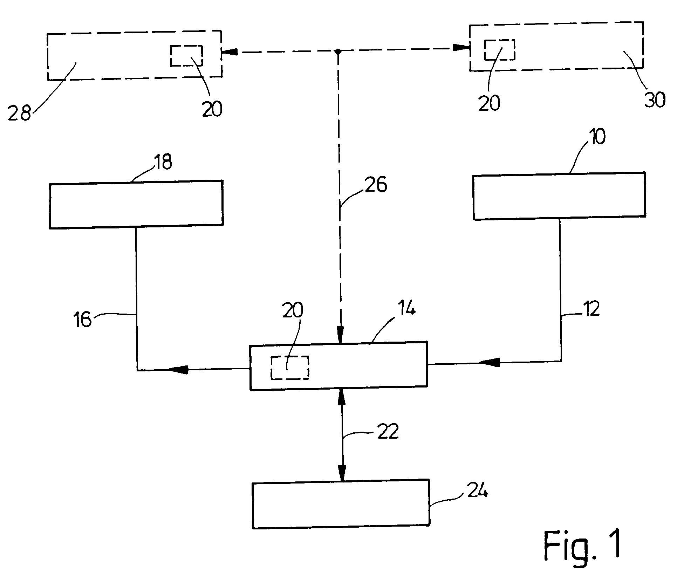

Die Figur 1 zeigt im Blockschaltbild einen als elektronisches Notizbuch ausgebildeten Bestandteil eines hier nicht dargestellten Heimwerker-Elektrogerätes, beispielsweise einer Bohrmaschine, einer Fräsmaschine, einer Handkreissäge oder ähnlichem. Das elektronische Notizbuch weist eine Eingabeeinheit 10 auf, die über eine Leitung 12 mit einer Speichereinheit 14 verbunden ist. Die Speichereinheit 14 ist über eine zweite Leitung 16 mit einer Ausgabeeinheit 18 verbunden. Die Speichereinheit 14 besitzt eine hier schematisch angedeutete einsteckbare Speicherkarte 20. Die Speicherkarte 20 ist über eine hier mit 22 angedeutete, an sich nicht vorhandene bidirektionelle Verbindung mit einem Personalcomputer 24 verbunden. Die Eingabeeinheit 10 kann dabei entweder als eine Tastatur oder als ein Sprachdecoder ausgebildet sein. Die Ausgabeeinheit 18 ist ein am Heimwerker-Elektrogerät angeordnetes Display.

Über die weiterhin mit 26 angedeutete Verbindung kann die Speicherkarte 20 gegen eine neue Speicherkarte 20 bei einem Elektrogeräte-Hersteller 28 und/oder einem Elektrogeräte-Kundendienst 30 ausgetauscht und/oder zur Kontrolle gegeben werden.

Die in der Figur 1 gezeigte Anordnung übt folgende Funktion aus:
Im Auslieferungszustand des Heimwerker-Elektrogerätes sind auf der einsteckbaren Speicherkarte 20 die für die Bedienung des Heimwerker-Elektrogerätes notwendigen Informationen abgespeichert. Diese Informationen können von einem Benutzer über die Eingabeeinheit 10 abgerufen werden und auf dem Display der Ausgabeeinheit 18 sichtbar gemacht werden. Die Eingabeeinheit 10 ist dabei so ausgebildet, daß sie eine detailliertere Vorauswahl der für die Benutzer interessanten Informationen ermöglicht, beispielsweise den Einsatz einer Bohrmaschine bei verschiedenen anzubohrenden Materialien.

Als Beispiele für sehr vorteilhafte Anwendungen der Erfindung sollen nachfolgend drei Möglichkeiten genannt werden, die jedoch keinen Anspruch auf Vollständigkeit erheben:
a) Ein Anwender gibt über die Eingabeeinheit 10 einer Bohrmaschine ein, daß er in einer Betonwand einen 8 mm starken Dübel anbringen will. Über die Ausgabeeinheit 18 erhält der Anwender dann die Information, welchen Bohrer er in das Bohrfutter der Bohrmaschine einzuspannen hat, im vorliegenden Fall beispielsweise ein 8 mm Widiabohrer. Nach erfolgtem Einspannen des entsprechenden Bohrers zeigt ihm die Ausgabeeinheit 18 weiterhin an, ob tatsächlich der richtige Bohrer für den vorgesehenen Anwendungsfall eingespannt ist und zeigt darüber hinaus die für den beabsichtigten Bohrvorgang optimale Drehzahl und das Drehmoment an und stellt diese über hier nicht weiter zu betrachtende Stellglieder an der Bohrmaschine gleich richtig ein.
b) Ein Anwender beabsichtigt, mit einer Bohrmaschine ein Gewinde M6 in ein Metallstück schneiden zu wollen. Diese Informationen werden über die Eingabeeinheit 10 der Bohrmaschine eingegeben, die darauf den richtigen Kerndurchmesser des notwendigen Bohrloches an der Ausgabeeinheit 18 angibt, hier beispielsweise einen Durchmesser von 4,5 mm, und dann wiederum das erfolgte Einspannen des richtigen Bohrers in das Bohrfutter der Bohrmaschine meldet.
c) Ein Anwender beabsichtigt, mit einer Drahtbürste mit einem Durchmesser von 50 mm ein Metallstück zu bearbeiten. Über die Ausgabeeinheit 18 meldet ihm die Bohrmaschine die für diese geplante Bearbeitung optimale Drehzahl und stellt diese gegebenenfalls richtig ein.

Indem die einsteckbare Speicherkarte 20 der Speichereinheit 14 entnommen wird, kann diese einem Personalcomputer 24, der über eine entsprechende Leseeinheit verfügt, eingegeben werden. Somit ist es möglich, den gesamten Inhalt der Speicherkarte 20 auf dem Bildschirm des Personalcomputers 24 sichtbar zu machen bzw. diesen oder auch Teile davon auszudrucken.

Sehr vorteilhaft ist, daß die einsteckbare Speicherkarte 20 und/oder die Speichereinheit 14 Bereiche aufweist, die über die Eingabeeinheit 10 und/oder den Personalcomputer 24 mit vom Benutzer abhängigen persönlichen Daten belegt werden können. So ist es einerseits möglich, daß ein Benutzer bestimmte Betriebsdaten des Heimwerker-Elektrogerätes, die dieser eingestellt hat, um einen ganz bestimmten Arbeitsgang durchzuführen, abspeichert.

Soll nun dieser Arbeitsgang nach einer gewissen Zeit wiederholt werden, wobei je länger dieser Zeitraum ist, der Benutzer die seinerzeit eingestellten Werte nicht mehr nachvollziehen kann, diese über die Eingabeeinheit 10 und die einsteckbare Speicherkarte 20 ohne weiteres auf der Ausgabeeinheit 18 angezeigt werden können. Somit kann exakt die gleiche Betriebseinstellung des Heimwerker-Elektrogerätes wie beim ursprünglichen Einsatz erfolgen. Wenn die Speicherkarte 20 und/oder die Speichereinheit 14 über mehrere unabhängig voneinander steuerbare Speicherplätze verfügt, kann entweder eine entsprechend große Anzahl von Betriebseinstellungen abgespeichert werden und/oder mehrere verschiedene Benutzer können ihre für sie relevanten Daten getrennt abspeichern und jederzeit abrufen. Durch die Austauschbarkeit der Speicherkarte 20 können darüber hinaus auch vom Hersteller möglicherweise nachgeschobene Informationen oder Einstellmöglichkeiten des betreffenden Heimwerker-Elektrogerätes problemlos nachgereicht werden.

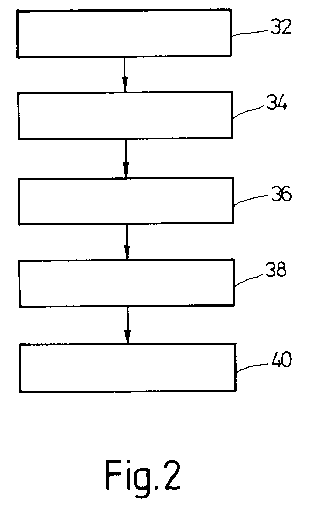

Der in Figur 2 gezeigte Flußplan soll die Einsatzmöglichkeiten der bereits zu Figur 1 beschriebenen Speicherkarte 20 verdeutlichen. Der Flußplan weist die Bereiche 32, 34, 36, 38 und 40 auf, die jeweils über eine angedeutete Verbindung die einzelnen zu durchlaufenden möglichen Zustände einer Speicherkarte 20 verdeutlichen sollen.

Im Bereich 32 wird die Speicherkarte 20 vom Elektrogeräte-Hersteller programmiert, indem dort die für das konkrete Elektrogerät typischen Daten abgespeichert werden. Dies können beispielsweise Standardanwendungsfälle und/oder Wartungs- und Bedienungshinweise sein. Im Bereich 34 geht die Speicherkarte 20 beispielsweise durch Erwerb eines mit einer Speicherkarte 20 ausgerüsteten Elektrogerätes auf den Anwender über. Dieser kann nunmehr auf die Speicherkarte 20 anwenderspezifische Daten eingeben. Dies kann beispielsweise eine spezielle Codierung zum Diebstahlschutz sein. Mit Feld 36 wird verdeutlicht, daß der Anwender hier auf der Speicherkarte 20 konkrete maschinentypische Einstellungen aufgrund von ihm vorgegebenen konkreten Anwendungsfällen, siehe beispielsweise weiter oben das Bohren eines Loches in eine Betonwand, vornehmen kann, wobei die Speicherkarte 20 gleichzeitig eine selbsttätige Steuerung bzw. Einstellung des Elektrogerätes realisieren kann.

Des weiteren können individuelle Anwendungsfälle einprogrammiert werden, die dann jederzeit über die Ausgabeeinheit 18 und/oder den bereits erwähnten Personalcomputer 24 gelesen und/oder geändert werden können. Mit Feld 38 wird verdeutlicht, daß für den Fall einer Reparatur oder Wartung des Elektrogerätes von der vorhandenen Speicherkarte 20 beispielsweise die bisherige Gesamtbetriebsdauer und/oder besondere Belastungen abgefragt werden können, so daß möglicherweise auf eine Abnutzung von bestimmten Verschleißteilen geschlußfolgert werden kann. In Feld 40 ist denkbar, daß durch den Elektrogeräte-Hersteller im Laufe der Zeit über das vorhandene Elektrogerät neue Informationen oder Anwendungsfälle bereitgestellt und diese beispielsweise auf einer neuen Speicherkarte 20 zur Verfügung gestellt werden können. Diese neue Speicherkarte 20 kann dann als Update gegen die alte Speicherkarte 20 ausgetauscht werden, so daß jederzeit die neuesten Informationen über das betreffende Elektrowerkzeug zur Verfügung stehen.

## Patentansprüche

1. Elektrogerät, insbesondere Heimwerker-Elektrogerät mit einer elektronischen Steuereinheit, **dadurch gekennzeichnet**, daß die elektronische Steuereinheit eine mit einer Speichereinheit (14) verbundene Eingabeeinheit (10) und eine ebenfalls mit der Speichereinheit (14) verbundene Ausgabeeinheit (18) aufweist und daß in der Speichereinheit (14) individuelle Informationen und/oder Programme für spezielle Einsatzsituationen nach einem vorgegebenen Algorithmus speicherbar sind.

2. Elektrogerät nach Anspruch 1, **dadurch gekennzeichnet**, daß die Eingabeeinheit (10) eine Betätigungselemente aufweisende Tastatur ist.

3. Elektrogerät nach einem der vorhergehenden Ansprüche, **dadurch gekennzeichnet**, daß die Eingabeeinheit (10) ein Sprachdecoder ist.

4. Elektrogerät nach einem der vorhergehenden Ansprüche, **dadurch gekennzeichnet**, daß die Ausgabeeinheit (18) ein Display ist.

5. Elektrogerät nach einem der vorhergehenden Ansprüche, **dadurch gekennzeichnet**, daß die Speichereinheit (14) externe Speichermittel aufweist.

6. Elektrogerät nach einem der vorhergehenden Ansprüche, **dadurch gekennzeichnet**, daß die externen Speichermittel einsteckbare Speicherkarten (20) sind.

7. Elektrogerät nach einem der vorhergehenden Ansprüche, **dadurch gekennzeichnet**, daß die externen Speichermittel und/oder die Speichereinheit (14) mit einem Personalcomputer (24) verbindbar sind.
